(19)

Europäisches
Patentamt
European
Patent Office
Office européen
des brevets

(11) **EP 3 337 221 A1**

(12) **EUROPEAN PATENT APPLICATION**

(43) Date of publication:
**20.06.2018 Bulletin 2018/25**

(51) Int Cl.:
***H04W 24/02*** *(2009.01)*

(21) Application number: **16306710.1**

(22) Date of filing: **16.12.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Alcatel Lucent
91620 Nozay (FR)**

(72) Inventors:
• **ATAWIA, Ramy
2018 Antwerp (BE)**
• **GACANIN, Haris
2018 Antwerp (BE)**

(74) Representative: **D'Halleweyn, Nele Veerle Trees
Gertrudis et al
Arnold & Siedsma
Bezuidenhoutseweg 57
2594 AC The Hague (NL)**

(54) **ACCESS NODE, CONTROLLER FOR ACCESS NODE, AND METHOD FOR OPTIMIZING NETWORK DEPLOYMENT**

(57)     A method for optimizing a deployment of an access node in a home network; the method comprising: determining at least one signal parameter pertaining to at least one of a backhaul interface coupling the access node to a backbone network and a fronthaul interface wirelessly coupling the access node to a user device; based on the determined at least one signal parameter and on at least one corresponding reference value, determining at least one redeployment recommendation; and outputting the determined at least one redeployment recommendation; wherein the at least one redeployment recommendation is determined taking into account at least one indication indicating at least one of a user response probability, a potential positive impact and a potential negative impact of a respective redeployment recommendation of the at least one redeployment recommendation.

FIG. 3

## Description

Field of Invention

The present invention relates to home network redeployment. Particular embodiments relate to a method for optimizing a deployment of an access network in a home network; to an access node for providing access to a home network; to a controller for controlling an access node; and to a computer program product.

Background

Future home networks, in particular indoor networks with a wireless connection component, are promising uniform coverage and throughput for most if not all users. While very high frequency bands (e.g. 60 GHz) with limited coverage are expected to dominate, greater numbers of access nodes may be required, in order to satisfy Gbps demands, which may makes their deployment challenging for an operator. Access nodes with self-deploying capabilities may promise cost-efficient access solutions, in particular indoors.

Current home network access node deployment typically relies on fully centralized or manual approaches.

In the former approach, the home network owner (e.g. an operator) may determine the optimal location of the access nodes. These approaches typically use the indoor layout and user information (such as user location and traffic) to evaluate multiple candidate locations for placing the access nodes. However, these centralized operator-based approaches are likely to fail to provide cost-efficient planning for future home networks that achieve Gbps throughput, since it is likely that a too great number of access nodes may be used. This is in addition to any dynamic changes in the home network environment (e.g. traffic and configuration of neighbouring home networks), which is likely to make the predetermined positions suboptimal.

The latter approach may rely on dispatching a technician in order to deploy an optimum setup at that moment, based on local radio frequency measurements, for example by a handheld device. This is a time consuming and expensive process, and may be suboptimal in highly dynamic environments (for example home networks where there are many changing users, such as in airports or train stations or large stores, etc.).

Summary

It should therefore become easier to evaluate the current location of an access node, and also to recommend a new deployment to the owner (e.g. user) in case of suboptimal performance. To that end, a way to optimize a deployment of an access node in a home network may be useful. It is advantageous if such a way to optimize a deployment suggests a particular redeployment recommendation if it is effective and efficient.

It is therefore an object of embodiments according to the present invention to allow a user to redeploy his or her home network for better performance, with redeployment recommendations that are likely to lead to good results.

According to a first aspect of the present invention there is provided a method for optimizing a deployment of an access node in a home network. The method may comprise: determining at least one signal parameter pertaining to at least one of a backhaul interface coupling the access node to a backbone network and a fronthaul interface wirelessly coupling the access node to a user device; based on the determined at least one signal parameter and on at least one corresponding reference value, determining at least one redeployment recommendation; and outputting the determined at least one redeployment recommendation. The at least one redeployment recommendation is determined taking into account at least one indication indicating at least one of a user response probability, a potential positive impact and a potential negative impact of a respective redeployment recommendation of the at least one redeployment recommendation.

In this manner, by taking into account the at least one indication, the method may determine the at least one redeployment recommendation such that it is or they are likely to lead to good results, because the method can take into account a user response probability (e.g. a likelihood that the user will respond to a given recommendation), and/or a potential positive and/or negative impact of the at least one recommendation (e.g. a predicted impact on a particular signal parameter of the home network).

In this context, it is to be noted that a home network may refer to a wireless local area network, in particular for indoors residential use. Such wireless local area networks may for example include networks according to the standard IEEE 802.11 of the Institute of Electrical and Electronics Engineers, but it will be understood that other types of networks may also be used.

In a particularly preferred embodiment, the outputting is on a physical output interface associated with the access node, in user-comprehensible form on the basis of the physical output as such.

In this manner, by outputting the determined at least one redeployment recommendation on the physical output interface, the user may redeploy his or her home network according to the at least one redeployment recommendation that is outputted in this manner, in particular because the physical output interface is associated with the access node, and in particular because the at least one redeployment recommendation is outputted in user-comprehensible form on the basis of the physical output as such - i.e. the output is of such a form as to be comprehensible for the user, based on only the physical output without requiring further technical processing steps.

In a further developed embodiment, the physical output interface may form part of the access node; and the physical output interface may comprise at least one of: a display configured for visual output; and a speaker configured for auditory output.

In this manner, the output may be readily available and comprehensible to the user. In an exemplary embodiment, the output may be a textual representation, preferably in natural language form. In another exemplary embodiment, the output may be a pictorial representation. If the physical output interface comprises a speaker configured for auditory output, the output may for example be a spoken message in natural language form. To this end, the access node may optionally comprise a natural language module, configured for producing natural language output based on the redeployment recommendation. Alternatively, the access node may for example rely on a predefined set of associations between possible redeployment recommendations and corresponding output. Alternatively, the access node may for example also rely on the recommendation(s) as provided by a controller, and simply output that or those recommendation(s) directly, without further processing by the access node.

In a further developed embodiment, the outputting of the determined at least one redeployment recommendation may comprise detecting a user response to the outputted determined at least one redeployment recommendation. In a specific embodiment, the method may further comprise halting the outputting of the determined at least one redeployment recommendation if the user response is detected.

In this manner, the method may prevent unnecessary outputting.

In a further developed embodiment, the method may comprise updating the at least one indication based on the detected user response. For example, in a specific exemplary embodiment, the method may further comprise, if the user response is detected, respectively assigning a response factor to the determined at least one redeployment recommendation, wherein a respective response factor is representative of a likelihood that a user responds to the respective redeployment recommendation; and the determining of the at least one redeployment recommendation may take into account the assigned response factor or factors. In this manner, the method may increase the likelihood that a user will respond to the outputted at least one redeployment recommendation. In another specific exemplary embodiment, the method may further comprise, if the user response is detected, respectively associating a detected change in at least one signal parameter pertaining to at least one of the backhaul interface and the fronthaul interface, with the determined at least one redeployment recommendation. In this manner, the method may learn to provide more effective redeployment recommendations.

In a further developed embodiment, a respective redeployment recommendation of the determined at least one redeployment recommendation may pertain to at least one of the following: a change of the coupling of the backhaul interface; a change of location of the access node; a change of location of another access node of the home network; and a change of location of another access node of another home network. The detected user response may pertain to the at least one corresponding change.

In this manner, the method may involve a way to optimize the performance of the access node.

In this context, it is to be understood that the change of the coupling of the backhaul interface may for example come to pass because the access node becomes coupled via a different access node (a so-called "master access node") to the backbone network instead of or in addition to the previous so-called master access node via which the access node was coupled to the backbone network, and/or because the access node becomes coupled to the so-called master access node via which it is coupled to the backbone network in a different manner (e.g. using a different connection technology, such as a wired connection technology, instead of or in addition to the previously used connection technology, such as a wireless connection technology). However, it will be understood that these are only examples, and that other changes of the coupling may also be considered.

Moreover, in this context, it is to be understood that any change of an access node (be it the present access node or another access node) may for example be expressed in terms of a relative displacement or in terms of an absolute position (in particular if a room layout of the home network is known or can be derived reliably).

In a further developed embodiment, detecting the user response to the outputted determined at least one redeployment recommendation may comprise: monitoring a backhaul signal strength parameter pertaining to the backhaul interface, during a monitoring time period; monitoring a fronthaul signal strength parameter pertaining to the fronthaul interface, during the monitoring time period; and detecting whether the monitored backhaul signal strength parameter changed more than a predetermined first threshold and whether the monitored fronthaul signal strength parameter changed more than a predetermined second threshold. Additionally or alternatively, detecting the user response to the outputted determined at least one redeployment recommendation may comprise: monitoring respective signal strength parameters of neighbouring access nodes and/or neighbouring user devices; and detecting whether at least one of the monitored respective signal strength parameters changed more than a predetermined third threshold.

In this manner, the method may reliably allow to determine whether or not the user has responded to the outputted at least one redeployment recommendation.

In a related example, the detecting of the user response to the outputted at least one redeployment recommendation may comprise detecting user input inputted to a physical input interface forming part of the access node (e.g. a button, a touchscreen, a switch, or the like).

In this manner, the method may allow the user to interact, in particular in order to acknowledge or to contravene the particular outputted at least one redeployment recommendation.

In a further developed embodiment, the determined at least one redeployment recommendation may be outputted during at most a predefined time period, and the method may further comprise halting the outputting of the determined at least one redeployment recommendation when the predefined time period ends. Optionally, the outputted at least one redeployment recommendation may relate to a first redeployment recommendation of the determined at least one redeployment recommendation and the method may comprise after halting the outputting (in particular, after halting the outputting due to the predefined time period ending, and/or after halting the outputting due to a user response being detected): outputting, on the physical output interface, in user-comprehensible form on the basis of the physical output as such, at least one further determined at least one redeployment recommendation relating to at least one further redeployment recommendation of the determined at least one redeployment recommendation, during at most at least one further predefined time period, while detecting a user response to the outputted at least one further determined at least one redeployment recommendation; and halting the outputting of the at least one further determined at least one redeployment recommendation if the user response is detected or when the respective further predefined time period ends.

In this manner, the method may prevent unnecessary outputting. Moreover, in this manner, the method may allow to cycle through different redeployment recommendations, if there are multiple, for example to find (and preferably act upon) one that is easy or desirable for the user to implement.

In a further developed embodiment, the method may comprise determining a user satisfaction parameter representing a relation between at least one actual signal parameter value determined for the user device and at least one reference signal parameter value for the user device. The determining of the at least one redeployment recommendation may further be performed based on the determined user satisfaction parameter.

In this manner, the method may be triggered in particular when it is desirable to apply the method.

In another related example, the potential positive impact and/or the potential negative impact may comprise a potential impact of at least one potential redeployment recommendation on at least one of the following: a channel capacity of the user device due to the at least one potential redeployment recommendation; a signal interference on at least one neighbouring access node and/or neighbouring user device due to the at least one potential redeployment recommendation; a signal transmission cooperation with at least one neighbouring access node of the same home network due to the at least one potential redeployment recommendation; a time period during which the at least one potential redeployment recommendation remains valid; a downtime of the home network and/or of a neighbouring home network due to the at least one potential redeployment recommendation; and an energy consumption of the home network due to the at least one potential redeployment recommendation.

According to another aspect of the present invention, there is provided an access node for providing access to a home network. The access node may comprise: a backhaul interface configured for coupling the access node to a backbone network; a fronthaul interface configured for wirelessly coupling the access node to a user device; a signal measurement module configured for determining at least one signal parameter pertaining to at least one of the backhaul interface and the fronthaul interface; and a physical output interface configured for receiving from a controller at least one redeployment recommendation determined based on the determined at least one signal parameter and on at least one corresponding reference value, and for outputting, in user-comprehensible form on the basis of the physical output as such, the at least one redeployment recommendation. The at least one redeployment recommendation is determined taking into account at least one indication indicating at least one of a user response probability, a potential positive impact and a potential negative impact of a respective redeployment recommendation of the at least one redeployment recommendation.

It will be understood by the skilled person that the features and advantages disclosed hereinabove with respect to various embodiments of the method may also apply, *mutatis mutandis*, to various embodiments of the access node.

In a further developed embodiment, the physical output interface may comprise at least one of the following: a display configured for visual output; and a speaker configured for auditory output.

In this manner, the output may be readily available and comprehensible to the user. In an exemplary embodiment, the output may be a textual representation, preferably in natural language form. In another exemplary embodiment, the output may be a pictorial representation. If the physical output interface comprises a speaker configured for auditory output, the output may for example be a spoken message in natural language form. To this end, the access node may optionally comprise a natural language module, configured for producing natural language output based on the redeployment recommendation. Alternatively, the access node may for example rely on a predefined set of associations between possible redeployment recommendations and corresponding output. Alternatively, the access node may for example also rely on the recommendation(s) as provided by the controller, and simply output that or those recommendation(s) directly, without further processing by the access node.

In a further developed embodiment, the access node may comprise a controller according to any one of the controller embodiments disclosed below, as the controller, wherein the diagnostic module of the controller may be configured for obtaining the at least one signal parameter from the signal measurement module, and wherein the recommendation module of the controller may be configured for providing the determined at least one redeployment recommendation to the physical output interface of the access node.

In this manner, the access node may use the controller for controlling its operation.

In a further developed embodiment, the access node may be configured for detecting a user response to the outputted determined at least one redeployment recommendation; and for providing the detected user response to the controller.

According to another aspect of the present invention, there is provided a controller for controlling an access node according to any one of the access node embodiments disclosed above, the controller being coupled to the access node. The controller may comprise a diagnostic module and a recommendation module. The diagnostic module may be configured for: obtaining from the access node at least one signal parameter pertaining to at least one of the backhaul interface of the access node and the fronthaul interface of the access node. The recommendation module may be configured for: based on the obtained at least one signal parameter and on at least one corresponding reference value, determining at least one redeployment recommendation, taking into account at least one indication indicating at least one of a user response probability, a potential positive impact and a potential negative impact of a respective redeployment recommendation of the at least one redeployment recommendation; and providing the determined at least one redeployment recommendation to the access node for outputting the determined at least one redeployment recommendation.

It will be understood by the skilled person that the features and advantages disclosed hereinabove with respect to various embodiments of the method and various embodiments of the access node may also apply, *mutatis mutandis,* to various embodiments of the controller

In a specifically preferred embodiment, recommendation module may be configured such that the outputting is in user-comprehensible form on the basis of the physical output as such.

In a further developed embodiment, the diagnostic module may further be configured for: obtaining at least one signal parameter demanded by the user device, as the at least one corresponding reference value; obtaining at least one corresponding signal parameter experienced by the user device; determining a user satisfaction parameter representing a relation between the at least one demanded signal parameter and the at least one experienced signal parameter; and, based on the determined user satisfaction parameter, detecting at least one shortcoming of at least one of the backhaul interface and the fronthaul interface. Also, the recommendation module may be configured for determining the at least one redeployment recommendation based on the detected at least one shortcoming.

In this manner, the controller may act in particular when it is desirable to operate.

In a further developed embodiment, the recommendation module may be configured for obtaining from the access node a detected user response to the outputted determined at least one redeployment recommendation; and for updating the at least one indication based on the detected user response.

In this manner, the controller can learn to provide more effective redeployment recommendations.

In a further developed embodiment, the diagnostic module may be coupled to an association table associating at least one application of the user device to the at least one corresponding reference value. Also, the at least one signal parameter value demanded by the user device may be obtained from the association table.

In this manner, the controller may readily retrieve useful reference values.

According to yet another aspect of the present invention, there is provided a computer program product comprising a computer-executable program of instructions for performing, when executed on a computer, the steps of the method of any one of the method embodiments described above.

It will be understood by the skilled person that the features and advantages disclosed hereinabove with respect to embodiments of the method may also apply, *mutatis mutandis,* to embodiments of the computer program product.

According to yet another aspect of the present invention, there is provided a digital storage medium encoding a computer-executable program of instructions to perform, when executed on a computer, the steps of the method of any one of the method embodiments described above.

It will be understood by the skilled person that the features and advantages disclosed hereinabove with respect to embodiments of the method may also apply, *mutatis mutandis,* to embodiments of the digital storage medium.

According to yet another aspect of the present invention, there is provided a device programmed to perform a method comprising the steps of any one of the methods of the method embodiments described above.

According to yet another aspect of the present invention, there is provided a method for downloading to a digital storage medium a computer-executable program of instructions to perform, when executed on a computer, the steps of the method of any one of the method embodiments described above.

It will be understood by the skilled person that the features and advantages disclosed hereinabove with respect to embodiments of the method may also apply, *mutatis mutandis,* to embodiments of the method for downloading.

Further aspects of the present invention are described by the dependent claims. The features from the dependent claims, features of any of the independent claims and any features of other dependent claims may be combined as considered appropriate to the person of ordinary skill in the art, and not only in the particular combinations as defined by the claims.

Brief description of the figures

The accompanying drawings are used to illustrate presently preferred non-limiting exemplary embodiments of devices of the present invention. The above and other advantages of the features and objects of the present invention will become more apparent and the present invention will be better understood from the following detailed description when read in conjunction with the accompanying drawings, in which:

Figure 1 schematically illustrates an embodiment of an access node and an embodiment of a controller according to the present invention;

Figure 2 schematically illustrates another embodiment of an access node according to the present invention, e.g. that shown in Figure 1;

Figure 3 schematically illustrates yet another embodiment of an access node according to the present invention, e.g. that shown in Figure 1;

Figure 4 schematically illustrates a flowchart of an embodiment of a method according to the present invention;

Figure 5 schematically illustrates a flowchart of another embodiment of a method according to the present invention;

Figure 6 schematically illustrates a flowchart of yet another embodiment of a method according to the present invention; and

Figure 7 schematically illustrates another embodiment of an access node according to the present invention; e.g. a further development of that shown in Figure 1.

Description of embodiments

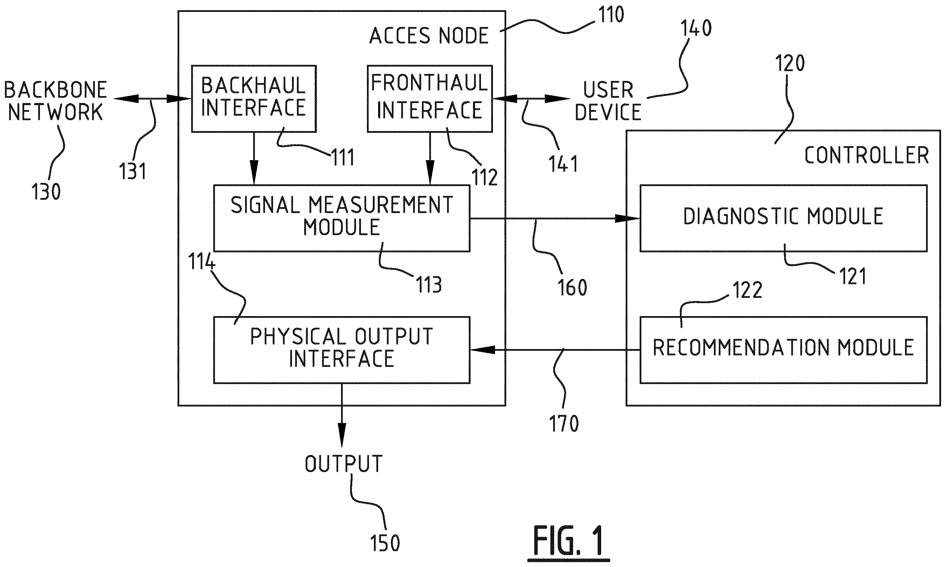

Figure 1 schematically illustrates an embodiment of an access node 110 and an embodiment of a controller 120 according to the present invention.

The access node may comprise a backhaul interface 111 and a fronthaul interface 112. The backhaul interface 111 may be coupled 131 to a backbone network 130, e.g. an IP network such as the Internet. The coupling 131 may be direct or may preferably be indirect via another access node (not shown) - such an other access node may also be called "a master access node". The fronthaul interface 112 may be coupled 141 to a user device 140, e.g. a set-top box, a desktop computer, a laptop computer, a smartphone, and the like. The coupling 141 may preferably be direct or may be indirect via another access node (not shown), in which latter case the present access node 110 may serve as a master access node for that other access node.

The access node 110 may further comprise a signal measurement module 113, preferably coupled to the backhaul interface 111 and the fronthaul interface 112. The signal measurement module 113 may be configured for determining at least one signal parameter pertaining to at least one of the backhaul interface 111 and the fronthaul interface 112.

The access node 110 may further comprise a physical output interface 114. This may be configured for receiving from a controller such as controller 120, which will be described below, at least one redeployment recommendation based on the determined at least one signal parameter and on at least one corresponding reference value. This may further be configured for outputting, in user-comprehensible form on the basis of the physical output 150 as such, the at least one redeployment recommendation. The at least one redeployment recommendation may have been determined taking into account at least one indication indicating at least one of a user response probability, a potential positive impact and a potential negative impact of a respective redeployment recommendation of the at least one redeployment recommendation.

The figure further shows a controller 120, which may comprise a diagnostic module 121 and a recommendation module 122

The diagnostic module 121 may be configured for obtaining from the access node 110 the at least one signal parameter, mentioned above, pertaining to at least one of the backhaul interface 111 of the access node 110 and the fronthaul interface 112 of the access node 110. The at least one signal parameter may for example be obtained in particular from the signal measurement module 113, via a connection 160.

The recommendation module 122 may be configured for, based on the obtained at least one signal parameter and on at least one corresponding reference value, determining the at least one redeployment recommendation mentioned above, taking into account at least one indication indicating at least one of a user response probability, a potential positive impact and a potential negative impact of a respective redeployment recommendation of the at least one redeployment recommendation. It may further be configured for providing the determined at least one redeployment recommendation to the access node 110 (for example in particular to the physical output interface 114 via a connection 170) for outputting, preferably in user-comprehensible form on the basis of the physical output 150 as such, the determined at least one redeployment recommendation.

The controller 120 may for example be a software module present in the access node 110, but it is to be noted that it may also be a hardware element of the access node 110. Alternatively, the controller 120 may be a software module executed outside of the access node 110, in a centralized or distributed manner, for example by a network operator, or by a specific access node designated for that purpose. Alternatively, the controller 120 may be a hardware element situated outside of the access node 110, for example at a network operator site. It may also be considered to combine one or more of these options for the controller 120.

In this manner, particular embodiments of the access node 110 and the controller 120 may provide a form of self-deployment, wherein the access node 110 may evaluate its current position and may provide redeployment recommendations to the user for new positions or parameter configurations. This may be done in a distributed manner, that may avoid interaction with the network operator and may minimize redeployment recommendations that depend on the user, in particular by checking for user-independent redeployment recommendations, and afterwards providing user-centric redeployment recommendations. Nevertheless, semi-distributed or centralized self-deployment may also be made available by using master access nodes or network controllers that are configured to enable cooperation between access nodes. Particular embodiments may thus help to provide uniform coverage and high throughput for future indoor networks and may minimize the burden of optimizing the location of access nodes, while it may help to ensure user satisfaction.

In a particular further developed embodiment, the recommendation module 122 may be configured for obtaining from the access node 110 a detected user response to the outputted determined at least one redeployment recommendation; and for updating the at least one indication based on the detected user response. Related to this particular further developed embodiment, in another particular embodiment, the access node 110 may be configured for detecting a user response to the outputted determined at least one redeployment recommendation; and for providing the detected user response to the controller 120.

Consequently, particular embodiments may help to address some or all of the following issues:

1) Reduce the need for manual deployment and location optimization. The access node may be capable of evaluating its current position and may provide redeployment recommendations to the user about a new position.

2) Automatically optimize the location of the access node according to the dynamics in the environment (e.g. demand and interference). This may in turn improve high-speed connectivity in future indoor networks and improve resource utilization.

3) Be aware of the user's preferences and his/her desire or ability to follow redeployment recommendations. This may help to reduce or even avoid worthless and sub-optimal redeployment recommendations, for example recommendations with a low user response probability, that are thus not likely to be followed by the user, or recommendations with a potential negative impact, that for example would increase overall risk (e.g. impact on other access nodes) in the home network.

In other words, by enabling an assessment of the optimality of the current location or coupling of an access node, and e.g. based on analysing user satisfaction, one or more redeployment recommendations may be outputted to the user in order to improve the provided network service. Based on determining the causes of the problem(s), e.g. by detecting shortcomings in fronthaul and/or in backhaul, various redeployment recommendations related to positioning or coupling of the access node may for example be displayed to the user. Furthermore, their potential impact may preferably be evaluated (by calculating risks, i.e. potential negative impacts, and rewards, i.e. potential positive impacts), in order to improve the network performance and the user's preference before engaging him or her in the self-deployment process.

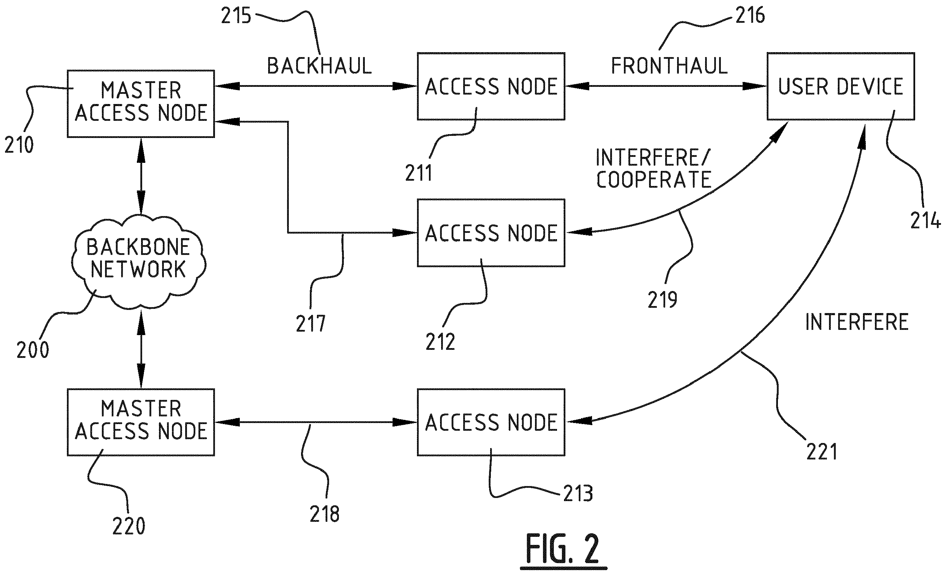

Figure 2 schematically illustrates another embodiment of an access node 211 according to the present invention, e.g. similar to that shown in Figure 1.

The figure shows a backbone network 200, similar to that mentioned above, a first master access node 210 and a second master access node 220 (wherein the words "first" and "second" are merely meant to more easily indicate the respective master access node). The figure further shows a first access node 211, a second access node 212 and a third access node 213. The figure also shows a user device 214. It will be understood that these elements are shown as an example only, and that there may be more or fewer master access nodes, more or fewer access nodes, and/or more or fewer user devices. The master access nodes 210 and 220 may for example be physilcally similar to the access nodes 211, 212 and 213, but may for example be logically programmed to behave as master access nodes - in other words, the access nodes 211, 212 and 213 may also be adapted to behave as master access nodes without difficulty.

The figure in particular shows a backhaul coupling 215 between master access node 210 and access node 211, a backhaul coupling 217 between the same master access node 210 and access node 212, and a backhaul coupling 218 between master access node 220 and access node 213. The figure also shows a fronthaul coupling 216 between access node 211 and user device 214. The respective backhaul couplings and fronthaul couplings may for example use respective backhaul and fronthaul interfaces of the respective access nodes.

In the particular setup illustrated in the figure, access node 212 may interfere with the fronthaul coupling 216, or may cooperate with the fronthaul coupling 216, depending on how it is controlled, because they may belong to the same home network, for example the home network associated with master access node 210. Also, in the particular setup illustrated in the figure, access node 213 may interfere with fronthaul coupling 216, because access node 213 may for example belong to another home network, for example the home network associated with master access node 220.

Optionally, there may be an upper level controller (not shown) present, to which access nodes (master access nodes and/or regular access nodes) may be coupled. Such an upper level controller may for example be central unit that may be configured to provide wide scale recommendations to the user, as will be further described below, or for collecting information from other access nodes in the network.

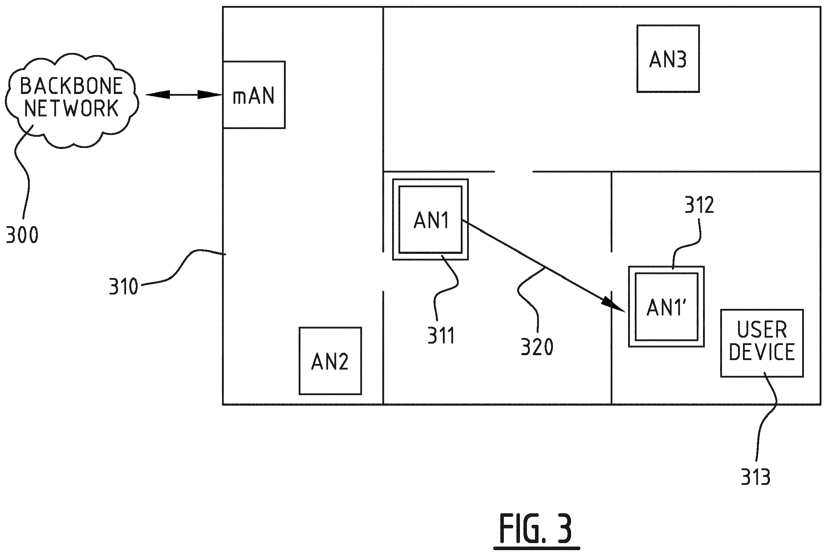

Figure 3 schematically illustrates yet another embodiment of an access node AN1 according to the present invention, e.g. similar to that shown in Figure 1.

The figure shows a backbone network 300, similar to those mentioned above, coupled to a master access node mAN. Master access node mAN may be situated within an indoors residence 310, for example a home of a private person, or a company's office, or a public building. The residence 310 may for example have one or more floors (only one is shown here), with one or more rooms each (four are shown here). In some of the rooms there may be access nodes present, such as access nodes AN1, AN2 and AN3. In this particular example, access nodes AN1, AN2 and AN3 may be coupled to master access node mAN via a backhaul coupling (not shown). Further, in this particular example, access node AN1 may be coupled to a particular user device 313 via a fronthaul coupling (not shown).

Moreover, the figure shows a particular scenario, wherein access node AN1 is first situated at a first location 311. The redeployment recommendation may for example be to move the access node AN1 to a second location 312. The access node AN1, when newly situated at that second location 312, is denoted in the figure as access node AN1'. In this particular example, the redeployment recommendation may comprise a change of location (here shown as a direct displacement 320, but this may also be a more complex trajectory). Alternatively, a change of the coupling of the backhaul interface may also be a possible redeployment recommendation (for example, "connect the access node to a wired connection"), or a change of location of another access node of the home network or even of another home network.

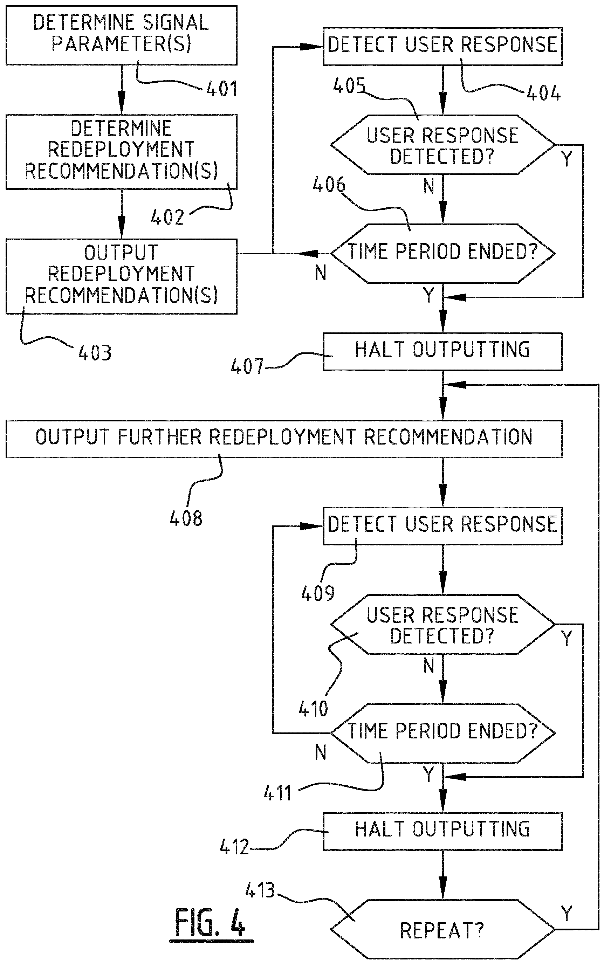

Figure 4 schematically illustrates a flowchart of an embodiment of a method according to the present invention. The method may serve for optimizing a deployment of an access node, such as the access nodes described above, in a home network. It will therefore be understood that the method may be applicable to the scenario's described above with reference to embodiments of the access node according to the present invention.

The method may comprise at least operations 401, 402 and 403, as will be explained below.

Operation 401 may comprise determining at least one signal parameter pertaining to at least one of a backhaul interface coupling the access node to a backbone network and a fronthaul interface wirelessly coupling the access node to a user device.

Operation 402 may comprise, based on the determined at least one signal parameter and on at least one corresponding reference value, determining at least one redeployment recommendation.

Operation 403 may comprise outputting, preferably on a physical output interface associated with the access node - for example physical output interface 114 of access node 110 of Figure 1, and preferably in user-comprehensible form on the basis of the physical output as such, the determined at least one redeployment recommendation. The at least one redeployment recommendation may be determined taking into account at least one indication indicating at least one of a user response probability, a potential positive impact and a potential negative impact of a respective redeployment recommendation of the at least one redeployment recommendation.

The method may suffice with the above-described operations 401, 402 and 403. However, optionally, the method may be extended with further operations as will be described below.

Operation 404 may comprise detecting a user response to the outputted determined at least one redeployment recommendation. This operation may be considered as a standalone operation, but it may equivalently be considered as an operation subsumed in operation 403.

Operation 405 may comprise deciding whether a user response has been detected. If so (option Y), the method may proceed to operation 407, which will be described below. If not (option N), the method may proceed to operation 406.

Operation 406 may comprise deciding whether a predefined time period has ended. If not (option N), the method may further continue to detect the user response in operation 404. If so (option Y), the method may proceed to operation 407.

Operation 407 may comprise halting the outputting of the determined at least one redeployment recommendation.

The method may suffice with the additional above-described operations 404-407. However, optionally, the method may be extended with further operations as will be described below, particularly in case if the outputted at least one redeployment recommendation relates to a first redeployment recommendation of the determined at least one redeployment recommendation, where there are further redeployment recommendations that can be outputted.

Operation 408 may comprise outputting, on the physical output interface, in user-comprehensible form on the basis of the physical output as such, at least one further determined at least one redeployment recommendation relating to at least one further redeployment recommendation of the determined at least one redeployment recommendation, during at most at least one further predefined time period (which may for example be checked in operation 411, as will be described below), while detecting a user response to the outputted at least one further determined at least one redeployment recommendation in operations 409 and 410, as will be described below.

Operation 409 may thus comprise detecting a user response, as explained above. As above, this operation may be considered as a standalone operation, but it may equivalently be considered as an operation subsumed in operation 408.

Operation 410 may comprise deciding whether a user response has been detected in operation 409. If so (option Y), the method may proceed to operation 412, which will be described below. If not (option N), the method may proceed to operation 411.

Operation 411 may thus comprise deciding whether a predefined time period has ended. If not (option N), the method may further continue to detect the user response in operation 409. If so (option Y), the method may proceed to operation 412.

Operation 412 may comprise halting the outputting of the at least one further determined at least one redeployment recommendation.

Optionally, it may be decided in operation 413 to repeat (option Y) outputting further redeployment recommendations via operation 408, if there are any further available.

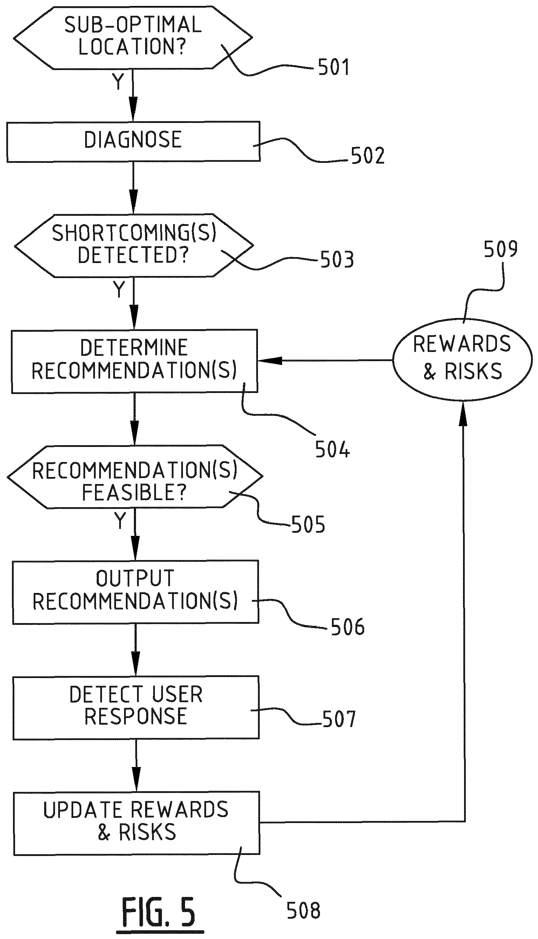

Figure 5 schematically illustrates a flowchart of another embodiment of a method according to the present invention. The method may also serve for optimizing a deployment of an access node, such as the access nodes described above, in a home network. It will therefore be understood that the method may be applicable to the scenario's described above with reference to embodiments of the access node according to the present invention.

The method may comprise (not shown) determining at least one signal parameter pertaining to at least one of a backhaul interface coupling the access node to a backbone network and a fronthaul interface wirelessly coupling the access node to a user device.

Operation 501 may comprise detecting whether the access node is situated at a sub-optimal location. If so (option Y), the method may proceed to operation 502.

In a further developed embodiment, it may be determined whether the associated user or users is/are satisfied with the current position of the access node or not.

Operation 502 may comprise diagnosing, for example to discover a reason of user dissatisfaction, which might be due to placing the access node too far away from its master access node (thus low backhaul throughput) or too far away from its user device (thus low fronthaul throughput).

Operation 503 may comprise deciding whether or not any shortcoming(s) is/are detected. If so (option Y), the method may proceed to operation 504. Such shortcomings may for example be associated with causes for the user dissatisfaction.

Operation 504 may comprise determining at least one redeployment recommendation, for example as in operation 402 of Figure 4. In particular, this may be based on at least one signal parameter determined in another operation (not shown) similar to operation 401 of Figure 4, and may further be based on at least one corresponding reference value. Optionally, this may be based on rewards and risks 509 associated with particular recommendations, as is discussed elsewhere herein - these rewards and risks 509 may also be called indications, and may indicate at least one of a user response probability, a potential positive impact and a potential negative impact of a respective redeployment recommendation of the at least one redeployment recommendation. The redeployment recommendation may indicate new location coordinates, or a relative movement in a particular direction, or even a request to change a way the access node is coupled to another entity.

In a particular exemplary embodiment, the rewards and risks 509 may take into account preferences of the user, in the sense that they may for example track whether the user previously responded to a redeployment recommendation or not, in order to improve future recommendations.

In another exemplary embodiment, for purposes of illustration, a redeployment recommendation "move the AN by 5 meters towards the user" may be considered. This recommendation i may be determined as follows, taking into account at least one indication indicating at least one of a user response probability, a potential positive impact and a potential negative impact of a respective redeployment recommendation of the at least one redeployment recommendation:

1) The fronthaul throughput demanded by the user (or in particular, by an application on a user device of the user) at time t may be denoted by $D_t$

2) The front-haul throughput of recommendation i executed by the user at time t may be denoted by $R_{f,t}$'

3) The back-haul throughput of recommendation i executed by the user at time t may be denoted by $R_{b,t}$'

4) Assuming that this recommendation i was executed $M_i$ times before, then

5) The average reward factor of recommendation i may be denoted by $A_i = \frac{1}{M_i} \sum_t \max\left(1, \frac{R_{f,t}'}{D_t}\right)$. The reward may be normalized and may equal 1 if the recommendation will satisfy the fronthaul throughput demand and may be less than 1 otherwise.

6) The average risk factor of recommendation i may be denoted by $K_i = 1 - \frac{1}{M_i} \sum_t \min\left(1, \frac{R_{b,t}'}{D_t}\right)$. The risk factor may be normalized and may equal 0 if the recommendation may not violate the backhaul throughput demand (i.e. $D_t \leq R_{b,t}'$). In this case, the risk may increase as the ratio $\frac{R_{b,t}'}{D_t}$ decreases.

7) If $A_i > K_i$, then the recommendation may be used as (one of) the redeployment recommendation(s) to be determined. Else, another recommendation may be determined. It will be noted that other functions may also be used, for example: $K_i <$ a first threshold and/or $A_i >$ a second threshold.

8) If no recommendation with reward value above the risk is found, then it may be chosen to output no redeployment recommendation.

9) The risks and rewards are calculated suing the previous outputs of this recommendation.

Operation 505 may comprise deciding whether or not the at least one redeployment recommendation is feasible. If so (option Y), the method may proceed to operation 506. If not (not shown), an upper level controller (not shown) may preferably be informed in order to provide a larger-scale solution. In order to be feasible, the recommendation should not have a (too great) negative impact on signal parameters of the home network, or even of other home networks.

Operation 506 may comprise outputting, on a physical output interface associated with the access node, in user-comprehensible form on the basis of the physical output as such, the determined at least one redeployment recommendation, for example as in operation 403 of Figure 4. This may for example be as described above with reference to other embodiments. In a particularly preferred embodiment, the access node may display a message on a display, the message indicating in natural language form a redeployment recommendation such as "Move the access node 5 meters closer to the user device" or the like.

Operation 507 may comprise detecting a user response.

Next, for a particular exemplary embodiment, it will be described how a user response may for example be detected.

A change in location of the access node may for example be detected by a built-in navigation module of the access node, if one is present. Else, this may for example be detected by using radio frequency measurements as follows. RSSI (i.e. Receive Signal Strength Indication) on the access node's backhaul may be monitored over a duration $\tau$. The change in backhaul RSSI may be denoted by $\Delta RSSI_b$. The change in user satisfaction (as described elsewhere herein) may be denoted by $\Delta F$. Accordingly, if the following condition is satisfied, then the reason may likely be due to the change in access node's location: $\Delta RSSI_b > C_1$ and $\Delta F > C_2$. Here, C1 and C2 may for example be constants that represent the minimal change of RSSI and user satisfaction due to a change in the access node's position. Their values may for example be determined by lab measurements in which the maximum RSSI deviation, due to small scale fading, is measured at multiple locations. In other words, detecting the user response to the outputted determined at least one redeployment recommendation may comprises: monitoring a backhaul signal strength parameter pertaining to the backhaul interface, during a monitoring time period; monitoring a fronthaul signal strength parameter pertaining to the fronthaul interface, during the monitoring time period; and detecting whether the monitored backhaul signal strength parameter changed more than a predetermined first threshold and whether the monitored fronthaul signal strength parameter changed more than a predetermined second threshold.

Alternatively, SSIDs and RSSIs of neighbouring nodes (neighbouring access nodes and neighbouring user devices) may be monitored. When the access node's position is changed, new nodes may for example be detected or old nodes may for example be removed from a wireless scan report of the access node. This may also be followed by a change in the RSSI values in the common detected neighbouring nodes at the two locations.

In other words, detecting the user response to the outputted determined at least one redeployment recommendation may comprise: monitoring respective signal strength parameters of neighbouring access nodes and/or neighbouring user devices; and detecting whether at least one of the monitored respective signal strength parameters changed more than a predetermined third threshold.

It will be understood that there may of course be other approaches to detect a user response.

Operation 508 may comprise updating the rewards and risks 509.

For a particular exemplary embodiment, this may be done as follows, for in particular the response factor of the user (that is, the likelihood that the user will respond to a particular redeployment recommendation) - which is an example of a user response probability. A response factor $S_i$ may be defined for every redeployment recommendation i (e.g. for moving the access node, or e.g. more specifically for moving the access node over a particular distance in a particular direction) and may be calculated as follows:

$$ S_i = \frac{\sum_{j \in N_i} \delta_j}{N_i} $$

Here, $\delta_j$ may for example be 1 if the user responds positively to the $i^{th}$ recommendation (e.g. the access node is moved), and may for example be 0 otherwise. $N_i$ may be the total number of occurrences of recommendation i.

Then, after checking the user's response, the response factor $S_i$ may be updated. In a specific embodiment, based on the values of $S_i$, the redeployment recommendations may for example be ordered before being outputted to the user.

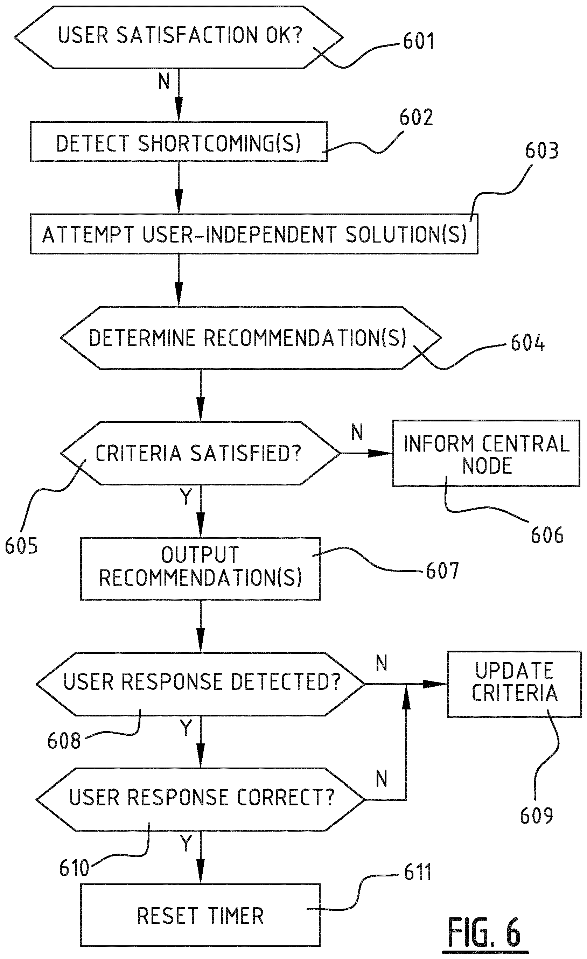

Figure 6 schematically illustrates a flowchart of yet another embodiment of a method according to the present invention. The method may also serve for optimizing a deployment of an access node, such as the access nodes described above, in a home network. It will therefore be understood that the method may be applicable to the scenario's described above with reference to embodiments of the access node according to the present invention.

The method may comprise (not shown) determining at least one signal parameter pertaining to at least one of a backhaul interface coupling the access node to a backbone network and a fronthaul interface wirelessly coupling the access node to a user device.

Operation 601 may comprise deciding whether or not user satisfaction is sufficient (denoted as "OK?"). If not (option N), that is, if the user is unlikely to be satisfied, the method may proceed to operation 602.

In a particular exemplary embodiment, the user's satisfaction may be represented for example as a ratio between the user's demand (desired throughput or delay), that is one or more demanded signal parameters, and the measured values (attained throughput and delay), that is one or more experienced signal parameters. The user's demand may for example be represented by the minimum data rate and/or maximum delay required for his or her application, denoted by $R_i'$ and $T_i'$, respectively, where i is the index of the respective user. These may for example be obtained from an association table associating at least one application of the user device to the at least one corresponding reference value. The current throughput and delay experienced by the user device may be denoted as $R_i$ and $T_i$, respectively. The satisfac-

tion factor F may for example be calculated as follows: $F = \min((R_i/R_i'),(T_i'/T_i))$. Here, if F is less than 1, this may for example indicate user dissatisfaction. However, it will be understood that other approaches may also be used.

Operation 602 may comprise detecting at least one shortcoming, in particular of at least one of the backhaul interface of the access node and the fronthaul interface of the access node. It may be noted that the results of such an operation may for example also be used for operation 503 of Figure 5.

In a particular exemplary embodiment, a cause of user dissatisfaction and the reason of sub-optimality in the current position may be detected, for example by measuring a signal parameter, such as RSSI of fronthaul and backhaul, and by comparing these to predetermined thresholds. It may be detected whether the quality impact of the backhaul or the quality impact of the fronthaul coupling is dominant, or whether there is a high demand exceeding the maximum supported throughput. In particular, backhaul quality may for example depend in particular on radio conditions between the master access node and the access node (e.g. the Receive Signal Strength Indication of the backhaul coupling, $RSSI_b$, and interference), the contention at the master access node and its traffic load. Fronthaul quality may for example depend in particular on the radio conditions between the access node and the user device (e.g. the Receive Signal Strength Indication of the fronthaul coupling, $RSSI_f$, and interference), the contention at the access node and its traffic load. Demand may also play a role, for example in particular in case there is user dissatisfaction even though both fronthaul and backhaul throughputs are at sufficiently high values - then, the problem may be attributed to very high user demand (of one or more users), in terms of high throughput, low delay and/or a very large number of users. Furthermore, such demand may not be satisfied by one access node and thus a central node may preferably be informed in order to provide larger scale redeployment recommendations (e.g. move other access nodes than the present access node).

Operation 603 may comprise attempting at least one user-independent solution. In a particular exemplary embodiment, this may for example include configuring physical and/or MAC parameters such as transmitted power, channel/frequency band and channel sensing thresholds, among others. This may for example also include other redeployment recommendations such as switching the user device to another access node or performing coordinated scheduling/beamforming with neighbouring access nodes.

Operation 604 may comprise determining at least one redeployment recommendation, based on at least one signal parameter determined in another operation (not shown) similar to operation 401 of Figure 4, and may further based on at least one corresponding reference value.

In a particular exemplary embodiment, the following may for example be candidate redeployment recommendations:

    i) Move the access node to location (x,y) - this may in particular be used when a layout of the environment of the access node is known

    ii) Move the access node towards master access node (in order to increase RSSI of backhaul)

    iii) Connect to another master access node (in order to increase capacity of backhaul)

    iv) Connect the access node to wired back-haul (in order to increase capacity of backhaul)

    v) Move the access node towards the user (in order to increase SINR of fronthaul)

    vi) Move the access node away from neighbouring access node (in order to reduce interference and/or contention)

    vii) Move the access node towards a neighbouring access node (in order to enable cooperative transmission)

    viii) Change the location of another access nodes (in order to enable cooperative transmission, and/or to reduce interference)

Nevertheless, it will be understood that other redeployment recommendations may also be used.

Operation 605 may comprise deciding whether or not one or more criteria have been satisfied - for example if a relevant criterion is greater (or less) than a corresponding predetermined threshold. If not (option N), the method may proceed to operation 606, wherein a central node may be informed (for example to propose changes to another home network to which the present access node does not belong, or relating to interfering access nodes that are invisible to the present access node). If so (option Y), the method may proceed to operation 607.

In a particular exemplary embodiment, such criteria may for example be one or more of the following criteria:

    i) a channel capacity at the user device (to increase throughput)

    ii) a negative impact on other network nodes, such as access nodes or user devices (to reduce interference or contention)

    iii) a signal transmission cooperation with neighbouring nodes (to exploit cooperative transmission/scheduling)

    iv) a network reconfiguration (to avoid service interruptions for other devices)

    v) a time period during which the at least one potential redeployment recommendation remains valid (to reduce the number of redeployment recommendations to the user by unit time)

    vi) a downtime of the home network and/or a neighbouring home network

    vii) an energy consumption

    viii) a likelihood to be followed by the user (e.g. using a response factor as a user response probability, as is described elsewhere herein)

Nevertheless, it will be understood that other redeployment recommendations may also be used.

Next, a specific example of determining such a redeployment recommendation and its calculation will be described, as well as its relation to several criteria. Assuming for this specific example that the diagnostic operation 502 revealed a low fronthaul quality and that optional user-independent redeployment recommendations failed to adequately address user dissatisfaction, then the access node may be moved towards the user device by X meters, where X may for example be calculated as follows:

    a) The back-haul and front-haul throughputs of the current suboptimal location may be denoted by $R_b$ and $R_f$, respectively. The corresponding RSSIs and distances may be denoted by $RSSI_b$, $RSSI_f$, $d_b$ and $d_f$. $d_b$ may be the distance between the access node and its master acces node, while $d_f$ is the distance between the access node and the user device.

    b) $R_b \propto \log(RSSI_b)$ and $RSSI_b \propto -n*\log(d_b)$ may represent the relations between the three parameters in the backhaul coupling. Similarly, $R_f \propto \log(RSSI_f)$ and $RSSI_f \propto -n*\log(d_f)$ may represent the relations between the three parameters in the fronthaul coupling. Here, n may denote the pathloss exponent.

    c) The target fronthaul throughput, denoted by $R_b'$, which may be attained at an RSSI value denoted by $RSSI_f'$, which may be obtained at a new distance $d_f'$. By using the fronthaul relations described above in step b), the new distance may be determined, and X may for example be calculated as $X= d_f - d_f'$.

    d) Risk calculation: moving the access node towards the user device may also result in moving the former away from the master access node, which may decrease backhaul throughput. This may be a potential negative impact of that particular redeployment recommendation. Accordingly, the new backhaul distance $d_b'$ may be $d_b'= d_b-X$ and its corresponding $RSSI_b'$ and $R_b'$ may be calculated as above in step c). If the resultant throughput $R_b'$ does not violate the target throughput $R'=R_f'$, then the risk may be low, for example compared to potential positive impact, and the redeployment recommendation may be outputted to the user. On a related note, it should be understood that other risks may account for contention at the new location, which may adopt wireless scanning done by the user device.

e) In case of high risk, a good compromise configuration may be detected and a new anticipated user satisfaction F' may be calculated.

The above of course represents an example only, and it will be understood that many different approaches may also be used.

Operation 607 may comprise outputting, on a physical output interface associated with the access node, in user-comprehensible form on the basis of the physical output as such, the determined at least one redeployment recommendation. This may for example be as described above with reference to other embodiments.

Operation 608 may comprise deciding whether or not a user response is detected. If not (option N), the method may proceed to operation 609, wherein the criteria described above may be updated to take into account the user's lack of response (preferably within a predefined time limit) to the particular outputted redeployment recommendation(s). If so (option Y), the method may proceed to operation 610.

Prior to this operation 608, another operation (not shown) may of course be performed similar to operation 507 of Figure 5.

Operation 610 may comprise deciding whether or not the user response is correct - that is, corresponds to one or more of the previously outputted redeployment recommendations in operation 607. This correspondence may for example be determined by analysing whether the detected user response satisfies expected changes to the deployment of the access node, and/or whether the changes to the deployment of the access node differ from proposed changes by less than a predetermined threshold amount. However, it will be understood that different ways of determining such correspondence may also be used. If it is decided not so (option N), the method may proceed to operation 609, wherein the criteria described above may be updated to take into account the difference between the proposed change and the actual change of the user response. If it is decided so (option Y), the method may proceed to operation 611.

Operation 611 may be considered entirely optional, and may comprise resetting a timer, for example to retrigger the entire method after some time has elapsed, in order to improve user satisfaction over time.

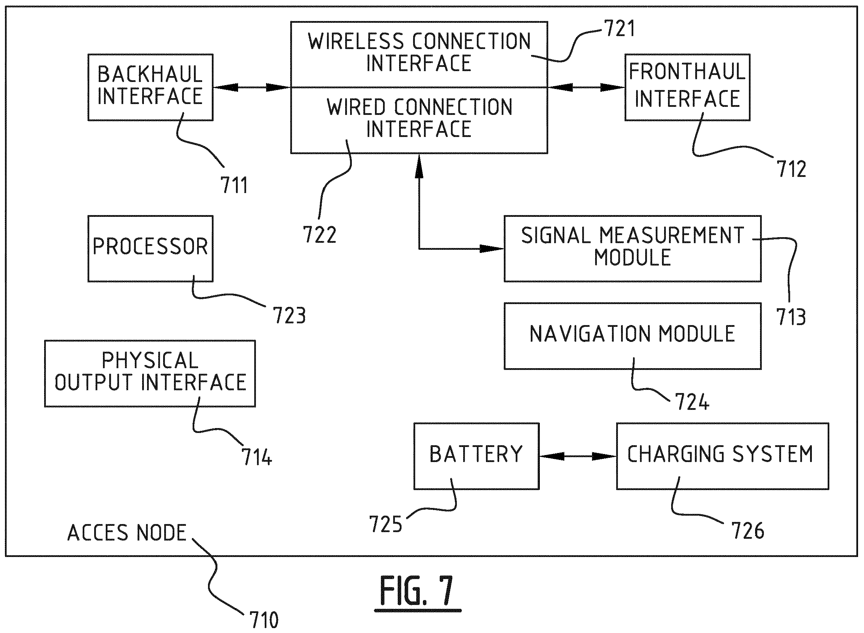

Figure 7 schematically illustrates another embodiment of an access node 710 according to the present invention; e.g. a further development of that shown in Figure 1 as access node 110.

The access node 710 may comprise a backhaul interface 711 and a fronthaul interface 712. The backhaul interface 711 may be configured to be coupled to a backbone network (not shown), e.g. an IP network such as the Internet. This coupling may be direct or may preferably be indirect via another (so-called master) access node (not shown). The fronthaul interface 712 may be configured to be coupled to a user device (not shown), e.g. a set-top box, a desktop computer, a laptop computer, a smartphone, and the like. This coupling may preferably be direct or may be indirect via another access node (not shown), in which latter case the present access node 710 may serve as a master access node for that other access node.

The access node 710 may further comprise a signal measurement module 713, preferably coupled to the backhaul interface 711 and the fronthaul interface 712. The signal measurement module 713 may be configured for determining at least one signal parameter pertaining to at least one of the backhaul interface 711 and the fronthaul interface 712.

The access node 710 may further comprise a physical output interface 714. This may be configured for receiving from a controller, for example a controller such as controller 120 of Figure 1, which is described above, at least one redeployment recommendation based on the determined at least one signal parameter and on at least one corresponding reference value. This may further be configured for outputting, in user-comprehensible form on the basis of the physical output as such, the at least one redeployment recommendation. The physical output interface 714 may for example comprise a display configured for visual output, and/or a speaker configured for auditory output.

The access node 710 may further comprise a wireless connection interface 721, for example a radio frequency front-end, such as one according to IEEE 802.11 ax, etc. Of course, other types of connection interfaces may be considered.

The access node 710 may further comprise a wired connection interface 722, for example a coaxial connection interface, a digital subscriber line connection interface, a fibre connection interface, or the like. Of course, other types of connection interfaces may be considered.

The backhaul interface 711 and the fronthaul interface 712 may for example select one or more of the wireless connection interface 721 and the wired connection interface 722 to use this or these to couple to another entity. In particular, both the backhaul interface 711 and the fronthaul interface 712 may use a same connection interface, or they may use different connection interfaces, for this purpose.

The access node 710 may be directly coupled to the backbone network (not shown) using the wired connection interface 722, for example in a legacy situation.

The access node 710 may further comprise a processor 723 configured to control its other components.

The access node 710 may further comprise an optional navigation module 724, which may be configured for determined the geolocation of the access node 710, for example to improve information relating to the at least one signal parameter. The navigation module 724 may e.g. be configured for LiDAR or Wi-Fi positioning, to directly calculate the access node's position or to collect localization information and send it to a central nodes for further processing.

The access node 710 may further comprise a battery 725 to allow independent operation, as well as a charging system 726 configured for charging the battery 725 and/or for powering the access node 710. The charging system 726 may for example be configured to be coupled to mains power, or to harvest energy from its surroundings.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The program storage devices may be resident program storage devices or may be removable program storage devices, such as smart cards. The embodiments are also intended to cover computers programmed to perform said steps of the above-described methods.

The description and drawings merely illustrate the principles of the present invention. It will thus be appreciated that those skilled in the art will be able to devise various arrangements that, although not explicitly described or shown herein, embody the principles of the present invention and are included within its scope. Furthermore, all examples recited herein are principally intended expressly to be only for pedagogical purposes to aid the reader in understanding the principles of the present invention and the concepts contributed by the inventor(s) to furthering the art, and are to be construed as being without limitation to such specifically recited examples and conditions. Moreover, all statements herein reciting principles, aspects, and embodiments of the present invention, as well as specific examples thereof, are intended to encompass equivalents thereof.

The functions of the various elements shown in the figures, including any functional blocks labelled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the present invention. Similarly, it will be appreciated that any flowcharts, flow diagrams, state transition diagrams, pseudo code, and the like represent various processes which may be substantially represented in computer readable medium and so executed by a computer.

It should be noted that the above-mentioned embodiments illustrate rather than limit the present invention and that those skilled in the art will be able to design alternative embodiments without departing from the scope of the appended claims. In the claims, any reference signs placed between parentheses shall not be construed as limiting the claim. The word "comprising" does not exclude the presence of elements or steps not listed in a claim. The word "a" or "an" preceding an element does not exclude the presence of a plurality of such elements. The present invention can be implemented by means of hardware comprising several distinct elements and by means of a suitably programmed computer. In claims enumerating several means, several of these means can be embodied by one and the same item of hardware. The usage of the words "first", "second", "third", etc. does not indicate any ordering or priority. These words are to be interpreted as names used for convenience.

In the present invention, expressions such as "comprise", "include", "have", "may comprise", "may include", or "may have" indicate existence of corresponding features but do not exclude existence of additional features.

Whilst the principles of the present invention have been set out above in connection with specific embodiments, it is to be understood that this description is merely made by way of example and not as a limitation of the scope of protection which is determined by the appended claims.

**Claims**

1. A method for optimizing a deployment of an access node in a home network; the method comprising:

   - determining at least one signal parameter pertaining to at least one of a backhaul interface coupling the access node to a backbone network and a fronthaul interface wirelessly coupling the access node to a user device;
   - based on the determined at least one signal parameter and on at least one corresponding reference value, determining at least one redeployment recommendation; and
   - outputting the determined at least one redeployment recommendation;

   wherein the at least one redeployment recommendation is determined taking into account at least one indication indicating at least one of a user response probability, a potential positive impact and a potential negative impact of a respective redeployment recommendation of the at least one redeployment recommendation.

2. The method of claim 1,
   wherein the outputting is on a physical output interface associated with the access node, in user-comprehensible form on the basis of the physical output as such;
   wherein the physical output interface preferably forms part of the access node; and
   wherein the physical output interface preferably comprises at least one of: a display configured for visual output; and a speaker configured for auditory output.

3. The method of any one of the previous claims,
   wherein the outputting of the determined at least one redeployment recommendation comprises detecting a user response to the outputted determined at least one redeployment recommendation; and
   wherein the method preferably further comprises halting the outputting of the determined at least one redeployment recommendation if the user response is detected.

4. The method of claim 3, further comprising updating the at least one indication based on the detected user response.

5. The method of claim 3 or 4,
   wherein a respective redeployment recommendation of the determined at least one redeployment recommendation pertains to at least one of the following:

   - a change of the coupling of the backhaul interface;
   - a change of location of the access node;
   - a change of location of another access node of the home network; and
   - a change of location of another access node of another home network; and

   wherein the detected user response pertains to the at least one corresponding change.

6. The method of claim 3, 4 or 5,
   wherein detecting the user response to the outputted determined at least one redeployment recommendation comprises:

   - monitoring a backhaul signal strength parameter pertaining to the backhaul interface, during a monitoring time period;
   - monitoring a fronthaul signal strength parameter pertaining to the fronthaul interface, during the monitoring time period; and
   - detecting whether the monitored backhaul signal strength parameter changed more than a predetermined first threshold and whether the monitored fronthaul signal strength parameter changed more than a predetermined second threshold; and/or

   wherein detecting the user response to the outputted determined at least one redeployment recommendation comprises:

   - monitoring respective signal strength parameters of neighbouring access nodes and/or neighbouring user devices; and
   - detecting whether at least one of the monitored respective signal strength parameters changed more than a predetermined third threshold.

7. The method of any one of the previous claims,
   wherein the determined at least one redeployment recommendation is outputted during at most a predefined time period; and
   wherein the method further comprises halting the outputting of the determined at least one redeployment recommendation when the predefined time period ends; and
   wherein, optionally, the outputted at least one redeployment recommendation relates to a first redeployment recommendation of the determined at least one redeployment recommendation and the method comprises after halting the outputting:

- outputting, on the physical output interface, in user-comprehensible form on the basis of the physical output as such, at least one further determined at least one redeployment recommendation relating to at least one further redeployment recommendation of the determined at least one redeployment recommendation, during at most at least one further predefined time period, while detecting a user response to the outputted at least one further determined at least one redeployment recommendation; and
- halting the outputting of the at least one further determined at least one redeployment recommendation if the user response is detected or when the respective further predefined time period ends.

8. A controller for controlling an access node according to any one of the claims 11-14, the controller being coupled to the access node; the controller comprising:

   - a diagnostic module configured for:
   - obtaining from the access node at least one signal parameter pertaining to at least one of the backhaul interface of the access node and the fronthaul interface of the access node; and
   - a recommendation module configured for:
   - based on the obtained at least one signal parameter and on at least one corresponding reference value, determining at least one redeployment recommendation, taking into account at least one indication indicating at least one of a user response probability, a potential positive impact and a potential negative impact of a respective redeployment recommendation of the at least one redeployment recommendation; and
   - providing the determined at least one redeployment recommendation to the access node for outputting, preferably in user-comprehensible form on the basis of the physical output as such, the determined at least one redeployment recommendation.

9. The controller of claim 8,
   wherein the diagnostic module is further configured for:

   - obtaining at least one signal parameter demanded by the user device, as the at least one corresponding reference value;
   - obtaining at least one corresponding signal parameter experienced by the user device;
   - determining a user satisfaction parameter representing a relation between the at least one demanded signal parameter and the at least one experienced signal parameter; and

- based on the determined user satisfaction parameter, detecting at least one shortcoming of at least one of the backhaul interface and the fronthaul interface; and

wherein the recommendation module is configured for:

   - determining the at least one redeployment recommendation based on the detected at least one shortcoming.

10. The controller of any one of the claims 8-9, wherein the recommendation module is configured for obtaining from the access node a detected user response to the outputted determined at least one redeployment recommendation; and for updating the at least one indication based on the detected user response.

11. An access node for providing access to a home network; the access node comprising:

   - a backhaul interface configured for coupling the access node to a backbone network;
   - a fronthaul interface configured for wirelessly coupling the access node to a user device;
   - a signal measurement module configured for determining at least one signal parameter pertaining to at least one of the backhaul interface and the fronthaul interface; and
   - a physical output interface configured for receiving from a controller at least one redeployment recommendation determined based on the determined at least one signal parameter and on at least one corresponding reference value, and for outputting, in user-comprehensible form on the basis of the physical output as such, the at least one redeployment recommendation; wherein the at least one redeployment recommendation is determined taking into account at least one indication indicating at least one of a user response probability, a potential positive impact and a potential negative impact of a respective redeployment recommendation of the at least one redeployment recommendation.

12. The access node of claim 11,
   wherein the physical output interface comprises at least one of the following: a display configured for visual output; and a speaker configured for auditory output.

13. The access node of any one of the claims 11-12, comprising a controller according to any one of the claims 8-10 as the controller, wherein the diagnostic module of the controller is configured for obtaining the at least one signal parameter from the signal measurement module, and wherein the recommendation module of the controller is configured for providing the determined at least one redeployment recommendation to the physical output interface of the access node.

14. The access node of any one of the claims 11-13, configured for detecting a user response to the outputted determined at least one redeployment recommendation; and for providing the detected user response to the controller.

15. A computer program product comprising a computer-executable program of instructions for performing, when executed on a computer, the steps of the method of any one of claims 1-7.

FIG. 1

FIG. 2

FIG. 3

EP 3 337 221 A1

```
┌─────────────────────┐                    ┌──────────────────────────┐
│ DETERMINE SIGNAL    │            ┌──────→│  DETECT USER RESPONSE    │
│   PARAMETER(S)      │            │       └──────────────────────────┘
└─────────────────────┘            │          405          │    404
          │  ╲401                  │            ╲           ↓     ╱
          ↓                        │         ╭──────────────────────╮
┌─────────────────────┐           │         │    USER RESPONSE       │  Y
│     DETERMINE       │           │         │    DETECTED?           ├──┐
│   REDEPLOYMENT      │           │         ╰──────────────────────╯   │
│  RECOMMENDATION(S)  │           │    406        │ N                   │
└─────────────────────┘           │     ╲         ↓                    │
          │   ╲402                │   ╭──────────────────────────╮     │
          ↓                       │ N │    TIME PERIOD ENDED?     │     │
┌─────────────────────┐          ←───┤                          │     │
│      OUTPUT         │──────────────╰──────────────────────────╯     │
│   REDEPLOYMENT      │                    │ Y          ←─────────────┘
│  RECOMMENDATION(S)  │                    ↓
└─────────────────────┘            ┌──────────────────────────┐
        ╲403              407──────┤     HALT OUTPUTTING      │
                                   └──────────────────────────┘
                                              │              ←──────────┐
┌──────────────────────────────────────────────────────────────┐      │
│    OUTPUT FURTHER REDEPLOYMENT RECOMMENDATION                  │      │
└──────────────────────────────────────────────────────────────┘      │
            ╲408                              │                         │
                                              ↓                         │
                                   ┌──────────────────────────┐         │
                           ┌──────→│  DETECT USER RESPONSE    │         │
                           │       └──────────────────────────┘         │
                           │          409          │                    │
                           │            ╲          ↓                    │
                           │         ╭──────────────────────╮           │
                           │         │    USER RESPONSE       │  Y       │
                           │         │    DETECTED?           ├──┐       │
                           │         ╰──────────────────────╯   │       │
                           │    410        │ N                   │       │
                           │     ╲         ↓                    │       │
                           │   ╭──────────────────────────╮     │       │
                           │ N │    TIME PERIOD ENDED?     │     │       │
                          ←────┤                          │     │       │
                               ╰──────────────────────────╯     │       │
                       411          │ Y          ←─────────────┘       │
                        ╲           ↓                                   │
                           ┌──────────────────────────┐                 │
                   412─────┤     HALT OUTPUTTING      │                 │
                           └──────────────────────────┘                 │
                                              │                         │
            413                               ↓                         │
             ╲                     ╭──────────────────────╮  Y          │
                                   │        REPEAT?        ├─────────────┘
   FIG. 4                          ╰──────────────────────╯
```

FIG. 4

SUB-OPTIMAL
LOCATION? — 501

Y

DIAGNOSE — 502

SHORTCOMING(S)
DETECTED? — 503

Y

DETERMINE
RECOMMENDATION(S) ← REWARDS
& RISKS — 509
— 504

RECOMMENDATION(S)
FEASIBLE? — 505

Y

OUTPUT
RECOMMENDATION(S) — 506

DETECT USER
RESPONSE — 507

UPDATE REWARDS
& RISKS — 508

<u>FIG. 5</u>

FIG. 6

FIG. 7

EP 3 337 221 A1

Europäisches
Patentamt

European
Patent Office

Office européen
des brevets

# EUROPEAN SEARCH REPORT

Application Number

EP 16 30 6710

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2009/022952 A1 (ERICSSON TELEFON AB L M [SE]; BJOERKEN PETER [SE]) 19 February 2009 (2009-02-19) * page 1, line 11 - line 15 * * page 3, line 32 - page 4, line 6 * * page 6, line 5 - page 11, line 6 * ----- | 1-15 | INV. H04W24/02 |
| X | US 2010/302965 A1 (CATOVIC AMER [US] ET AL) 2 December 2010 (2010-12-02) * paragraph [0054] - paragraph [0067] * ----- | 1-15 | |

TECHNICAL FIELDS
SEARCHED      (IPC)

H04W

The present search report has been drawn up for all claims

| Place of search | Date of completion of the search | Examiner |
|---|---|---|
| Munich | 24 April 2017 | Zembery, Peter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 ..........................................................................................
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 16 30 6710

This annex lists the patent family members relating to the patent documents cited in the above-mentioned European search report.
The members are as contained in the European Patent Office EDP file on
The European Patent Office is in no way liable for these particulars which are merely given for the purpose of information.

24-04-2017

| Patent document cited in search report | | | Publication date | Patent family member(s) | | | Publication date |
|---|---|---|---|---|---|---|---|
| WO 2009022952 | A1 | | 19-02-2009 | EP | 2189020 | A1 | 26-05-2010 |
| | | | | JP | 4860770 | B2 | 25-01-2012 |
| | | | | JP | 2010537475 | A | 02-12-2010 |
| | | | | US | 2011300842 | A1 | 08-12-2011 |
| | | | | WO | 2009022952 | A1 | 19-02-2009 |
| US 2010302965 | A1 | | 02-12-2010 | BR | PI1013810 | A2 | 12-04-2016 |
| | | | | CN | 102450066 | A | 09-05-2012 |
| | | | | EP | 2436218 | A1 | 04-04-2012 |
| | | | | JP | 5373195 | B2 | 18-12-2013 |
| | | | | JP | 2012528548 | A | 12-11-2012 |
| | | | | KR | 20120014935 | A | 20-02-2012 |
| | | | | TW | 201136407 | A | 16-10-2011 |
| | | | | US | 2010302965 | A1 | 02-12-2010 |
| | | | | WO | 2010138928 | A1 | 02-12-2010 |

EPO FORM P0459

For more details about this annex : see Official Journal of the European Patent Office, No. 12/82